# EUROPEAN PATENT SPECIFICATION

(11) **EP 3 888 830 B1**
(45) Date of publication and mention of the grant of the patent: **27.07.2022**
(21) Application number: 21166582.3
(22) Date of filing: 01.04.2021
(51) Int. Cl.: B23D 47/04, B23D 47/06, B27B 31/00

(54) **MOVEMENT UNIT AND RELATED METHOD FOR MOVING SEMI-FINISHED PRODUCTS**
BEWEGUNGSEINHEIT UND ZUGEHÖRIGE VERFAHREN ZUM BEWEGEN VON HALBPRODUKTEN
UNITÉ DE MISE EN MOUVEMENT ET PROCÉDÉ ASSOCIÉ POUR DÉPLACER DES PRODUITS SEMI-FINIS

(30) Priority: 03.04.2020 IT 202000007126
(43) Date of publication of application: 06.10.2021
(73) Proprietor: STROMAB S.P.A., 42012 Campagnola Emilia (RE) (IT)
(72) Inventor: VILLA, Marco, 42122 REGGIO EMILIA, Via Terrachini 43 (IT)
(74) Representative: Persi, Patrizia

(56) References cited:
- EP-A1- 3 106 275
- US-A1- 2008 017 003
- US-A1- 2009 211 665
- US-A1- 2012 060 662

## Description

The present invention relates to a movement unit for moving semi-finished products, according to the preamble of claim 1, and to a method for processing semi-finished products.

More in particular, the present invention relates to a movement unit configured to operate in a processing machine, for example for cutting or milling, configured to carry out processes, for example cutting or milling, on semi-finished products, such as wooden boards or planks and the like. The present invention also relates to a relative movement method for moving semi-finished products.

Even more in particular, the present invention relates to a processing machine for processing semi-finished products, comprising such a movement unit.

In the industrial sector of wood-cutting machines, it is extremely important to be able to ensure versatile machinery and processing processes, i.e., which are able to operate on a wide variety of semi-finished products.

In such an industrial sector, it is also important to be able to ensure machinery and work processes in which the finished product complies, in terms of quality, with a predetermined format.

Wood-cutting machines are known in which tool units are included, provided for example with a cutting device, such as a circular saw or a miller, which are placed at the end of a robotic arm so as to be movable between numerous positions in order to meet different processing needs. Such a type of tool unit is typically arranged so as to be associated with semi-finished product movement units, with which it cooperates.

In particular, movement units are known comprising movement assemblies placed upstream and downstream of the tool unit so as to define a processing path passing through such a tool unit.

Such movement assemblies are typically provided with movement elements, such as tracks or conveyor belts, configured to move the semi-finished products along the processing path, which is substantially straight. Furthermore, in order to retain the semi-finished products during the processes, such movement units are provided with lateral and/or upper retaining elements configured to engage and retain, at least slidingly, the semi-finished products.

If the semi-finished products are wooden planks and the tool unit is a cutting device arranged to receive a plank to be processed, the upstream movement assembly is configured to move the plank from an inlet to the tool unit and the downstream movement assembly is configured to move the plank processed by the tool unit to an outlet.

Such solutions have a number of disadvantages as well as operating limits.

In particular, in the movement unit, the movement assemblies are arranged at a fixed distance which depends on a maximum dimension which the tool unit can assume in the different positions.

In other words, the minimum distance at which the movement assemblies can be arranged must be greater than the maximum dimensions of the cutting device, in all the different possible positions.

It follows that the cutting machine will be able to process semi-finished products with a minimum length, in a longitudinal extension direction, strongly conditioned by the distance at which the movement assemblies are placed.

A further problem is generated by the movement elements, and in particular by the tracks or conveyor belts.

In fact, due to the intense stresses to which the semi-finished products are subjected during processing, it is possible that the surface constraint between the semi-finished product and the tracks or conveyor belts may fail.

It follows that the semi-finished product may undergo undesired movements during processing, thus leading to a lower quality processing than desired.

US 2009/211665 A1 discloses the preamble of claim 1, and in particular shows a timber cutting apparatus comprising a horizontal processing line, through which the timber being processed is guided which comprises transfer means provided with an elongated magnetic rail and two linear motor slides provided with grippers for grasping the timber.

EP 3 106 275 A1 shows a glass plate processing machine comprising a conveying device for advancing a plate in a substantially vertical position and a milling tool, for forming an opening in the plate. The movement of the plate is realised by a plurality of carts with gripping elements which can engage the rear face of the plate.

In this context, the object of the present invention is therefore to meet the needs highlighted above, and in particular an object of the present invention is to provide a movement unit, a processing machine and a processing method which allow to improve the quality of the processes.

A further object of the present invention is to provide a movement unit, a processing machine and a processing method which allow to operate on semi-finished products having a wide variety of dimensions and which allow to reduce the minimum possible length of the finished products obtained from the semi-finished products.

A further object of the present invention is to provide a more versatile movement unit, processing machine and processing method in order to make a large variety of processing available while ensuring an accurate control of the movement precision.

According to the invention, there is provided a movement unit defined by the features of claim 1, a processing machine comprising such a movement unit and a method for processing semi-finished products defined by the features of claim 11.

A plurality of exemplary but non-limiting embodiments are described below, as well as in the attached drawings, in which:
- figure 1 shows a schematic representation of a perspective view of a preferred embodiment of a cutting machine in accordance with the present invention;
- figure 2 shows a schematic representation of a perspective view of a preferred embodiment of a detail of a movement unit in accordance with the present invention;
- figures 3A and 3B show a front view of a detail of the cutting machine of figure 1 in two distinct configurations;
- figures 4A and 4B show respective sectional perspective views of a detail of the cutting machine of figure 1.

With reference to the appended figures, a movement unit for moving semi-finished products in accordance with the invention is indicated in its entirety by the number 1.

In the present description, the term "semi-finished products" is intended to mean wooden boards, wooden planks, and similar products of the manufacturing industry. Furthermore, the term "semi-finished products" is intended to mean products of the manufacturing industry extending along a main extension dimension. In other words, the term semi-finished products can be understood (not limitingly) as all those products having an elongated shape.

An exemplary and non-limiting embodiment of the unit 1 is shown in the figures.

Such a unit 1 essentially comprises a first and a second movement and retaining assembly 2a, 2b configured to move and retain the semi-finished product along a processing path "L".

The processing path "L" has an inlet portion, defined by the first movement and retaining assembly 2a, and an outlet portion, defined by the second movement and retaining assembly 2b.

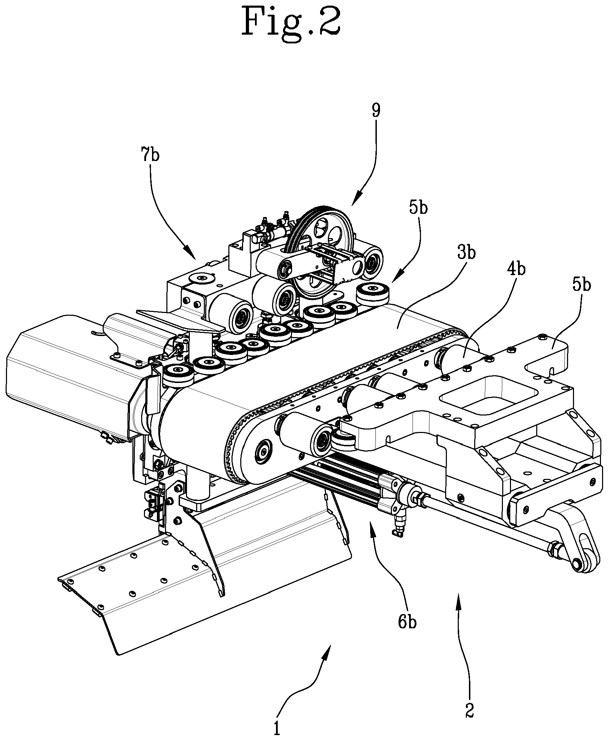

Functionally, said first and second movement and retaining assembly 2a, 2b are adapted to support the semi-finished product while said semi-finished product, as will be seen in the continuation of the present description, will be subjected to processes, for example cutting processes. Structurally, the first and second movement and retaining assembly 2a, 2b can substantially mirror each other. A preferred embodiment of one of the two assemblies is shown in detail in figure 2.

The first and/or the second movement and retaining assembly 2a, 2b are movable towards and away from each other along the processing path "L", as will be further detailed in the following.

According to the invention, the first and/or the second movement and retaining assembly 2a, 2b comprise a respective conveyor belt 3a, 3b for moving the semi-finished product and a respective secondary motor apparatus configured to move said conveyor belt 3a, 3b.

The first movement and retaining assembly 2a comprises the first conveyor belt 3a and the second movement and retaining assembly 3b comprises the second conveyor belt 3b.

Each conveyor belt 3a, 3b is configured to supportingly receive the semi-finished product and to move it along the processing path "L", transporting it.

More in particular, the conveyor belts 3a, 3b have a contact surface such as to constrain the semi-finished product by friction, thereby during an operation of the conveyor belts 3a, 3b, they are able to move the semi-finished product.

Preferably, each conveyor belt 3a, 3b has a very high surface friction coefficient, so as not to create slippage between conveyor belt 3a, 3b and semi-finished product.

Each of said secondary motor apparatuses comprises at least two movement rollers configured to move the respective conveyor belt 3a, 3b. In other words, the movement rollers are operatively connected to the respective conveyor belt 3a, 3b.

In detail, each conveyor belt 3a, 3b is associated with the two movement rollers, which are operatively arranged at the ends of the respective conveyor belt 3a, 3b so as to ensure maximum movement efficiency. For example, one of these two movement rollers can be directly driven by the secondary motor apparatus while the other can be idle.

Optionally, each conveyor belt 3a, 3b can be provided with tracks to effectively engage on the respective movement rollers.

Preferably, support elements are also present, operatively interposed between the movement rollers so as to define a rest plane for the respective conveyor belt 3a, 3b and, consequently, for the semi-finished product when resting on the conveyor belt 3a, 3b.

According to a preferred embodiment, such support elements comprise a plurality of support rollers arranged in succession to define the rest plane for the semi-finished product. Such support rollers are also preferably idle so as to allow an efficient sliding of the respective conveyor belt 3a, 3b. According to a further embodiment, such support elements comprise a low-friction plane, preferably coated in a material suitable for the purpose, such as for example nylon, so as to allow an efficient slipping between the low-friction plane and the respective conveyor belt 3a, 3b.

According to a further embodiment, such support elements comprise an alternation between support rollers and a low-friction plane.

Furthermore, each secondary motor apparatus is configured to move the respective conveyor belt 3a, 3b, in a direction consistent with the processing path "L" and in a direction opposite to the processing path "L" so as to be able to move the semi-finished product from the first movement and retaining assembly 2a to the second movement and retaining assembly 2b and vice versa.

Furthermore, as illustrated in the attached figures, flanking rollers 4a, 4b are included for the conveyor belts 3a, 3b so as to be able to ensure a stable support if wooden boards with a width greater than the width of the conveyor belts 3a, 3b are processed.

Advantageously, it is thereby possible to ensure greater processing flexibility and versatility since the conveyor belts 3a, 3b and the flanking rollers 4a, 4b (if present) allow to transport semi-finished products of different sizes.

Preferably, the first and/or the second movement and retaining assembly 2a, 2b comprise lateral retaining elements 5a, 5b which are movable towards and away from opposite lateral faces of the semi-finished product. The preferred embodiment includes that both movement and retaining assemblies 2a, 2b are provided with respective lateral retaining elements 5a, 5b.

More in particular, each movement and retaining assembly 2a, 2b includes a pair of lateral retaining elements 5a, 5b acting in abutment on opposite lateral faces of the semi-finished product.

Functionally, the lateral retaining elements 5a, 5b can assume a retaining configuration, in which they are in contact with the semi-finished product, and a disengaged configuration, in which at least one of the lateral retaining elements 5a, 5b is disengaged from the semi-finished product. The lateral retaining elements 5a, 5b are moved by respective actuators, indicated in the figures with the numerical reference 6a, 6b which activate them as a function of the dimensions and physical features of the semi-finished product to be transported.

More specifically, the lateral retaining elements 5a, 5b, when switched in the retaining configuration, realise a sliding contact with the semi-finished product, preferably through rollers.

Thereby, the lateral retaining elements 5a, 5b can act as containment guides of the semi-finished product within which the semi-finished product, moved by the conveyor belts 3a, 3b, is channelled.

It should be noted that due to the peculiar functional features thereof, in the retaining configuration, the lateral retaining elements 5a, 5b can also be configured to achieve stable contact with the semi-finished product, preferably by grasping the rollers. It follows that, through such stable contact, the lateral retaining elements 5a, 5b can act as clamps to constrain the semi-finished product.

The lateral retaining elements 5a, 5b can be moved by respective activating devices, preferably pneumatic and/or electrical.

In other words, each of the lateral retaining elements 5a, 5b is independently movable.

Advantageously, if the respective activating device is pneumatic, each of the lateral retaining elements 5a, 5b can impress a variable pressure, for example, between two values.

For example, there can be a pneumatic circuit which, by virtue of valves and controls of an appropriate type, can operate each lateral retaining element 5a, 5b in high or low pressure.

Alternatively, if the activating device is electrical, a respective motor can be present to control each of the lateral retaining elements 5a, 5b. In this case, each lateral retaining element 5a, 5b can be operated between a plurality of different pressures, for example without interruptions. Consequently, by moving each lateral retaining element 5a, 5b independently, the force impressed by the lateral retaining elements 5a, 5b on the semi-finished product can be differentiated according to a certain operation to be carried out on the semi-finished product itself. According to a further feature of the present invention, the movement and retaining assemblies 2a, 2b can preferably comprise upper retaining elements 7a, 7b configured to engage an upper face of the semi-finished product.

Such upper retaining elements 7a, 7b are movable at least in a transversal direction to the processing path "L".

In other words, the upper retaining elements 7a, 7b are vertically movable towards and away from the semi-finished product so as to be able to adapt to the thickness of the semi-finished product.

Preferably, such upper retaining elements 7a, 7b are configured to realise a sliding contact with the semi-finished product, preferably by means of rollers or the like.

Like the lateral retaining elements 5a, 5b, the upper retaining elements 7a, 7b can also be moved by respective activating devices, preferably pneumatic and/or electric.

In other words, each of the upper retaining elements 7a, 7b is independently movable.

Advantageously, if the respective activating device is pneumatic, in a manner similar to what is mentioned above for the lateral retaining elements 5a, 5b, each of the upper retaining elements 7a, 7b can impart a variable pressure, for example between two values, i.e., high or low pressure.

Alternatively, if the activating device is electrical, in a manner similar to what is mentioned above, a respective motor can be present to control each of the upper retaining elements 7a, 7b and each upper retaining element 7a, 7b can be driven among a plurality of different pressures, for example without interruption.

Consequently, in other words, the force exerted by the upper retaining elements 7a, 7b on the semi-finished product can be differentiated according to a certain operation to be carried out on the semi-finished product itself.

By virtue of the fact that each of the lateral 5a, 5b and upper retaining elements 7a, 7b can be moved independently of the others, the possibility of carrying out complex operations is increased, with accurate control of the precision of each movement.

Advantageously, by virtue of the cooperation of conveyor belts 3a, 3b and lateral 5a, 5b and upper retaining elements 7a, 7b, in the processing steps, the semi-finished product is firmly retained, limiting possible undesired movements and improving the accuracy of the entire process. In other words, the conveyor belts 3a, 3b and the lateral 5a, 5b and upper 7a, 7b retaining elements are able to allow a movement of the semi-finished product or are able to realise a stable and firm retention of the same depending on the process to be carried out.

It has been said that, in accordance with the present invention, the first and/or the second movement and retaining assembly 2a, 2b is movable towards and away from each other along the processing path "L".

Preferably, only the first movement and retaining assembly 2a can be movable with respect to the second movement and retaining assembly 2b. Preferably, only the second movement and retaining assembly 2b can be movable with respect to the first movement and retaining assembly 2a. Even more preferably, both movement and retaining assemblies 2a and 2b can be movable with respect to each other along the processing path "L". Advantageously, the first movement and retaining assembly 2a and the second assembly 2b are thus configured to modify an operating distance between the two as a function of the different semi-finished products to be transported and/or retained.

Preferably, the first and the second movement and retaining assembly 2a, 2b are movable independently with respect to one another along the processing path "L".

Each of the first and the second movement and retaining assembly 2a, 2b comprises a respective main motor apparatus 8, configured to move the respective movement and retaining assembly 2a, 2b.

In other words, each movement and retaining assembly, i.e., the first movement and retaining assembly 2a and/or the second movement and retaining assembly 2b, can comprise a main motor apparatus 8 to move the same independently of the other movement and retaining assembly 2b and/or 2a and can additionally comprise a secondary motor apparatus to move the conveyor belt 3a, 3b, on which the semi-finished product is supportingly received.

Overall, therefore, the semi-finished product movement unit object of the present invention can comprise four motor apparatuses independent of each other, among which two are the secondary motor apparatuses for the respective conveyor belts 3a, 3b while two are the main motor apparatuses 8 for the movement and retaining assemblies 2a, 2b.

The main motor apparatus 8 of each movement and retaining assembly 2a, 2b is configured to simultaneously move both the secondary motor apparatus and the respective conveyor belt 3a, 3b.

It follows that each movement and retaining assembly 2a, 2b, being provided with a respective conveyor belt 3a, 3b, is compact and does not require an extended support base in a transversal direction with respect to the processing path L.

Advantageously, therefore, the movement of the semi-finished product in the processing path L can be accurately controlled, as will be seen in detail below, since only the main motor apparatus 8 of a movement and retaining assembly 2a, 2b can be driven, keeping the secondary motor apparatus stationary, to make the semi-finished product advance while the respective conveyor belt 3a and/or 3b is immovable; or alternatively only the first conveyor belt 3a and/or the second conveyor belt 3b can be driven by the respective secondary motor apparatus, keeping the main motor apparatus 8 of the respective movement and retaining assembly 2a, 2b stationary.

Alternatively, both the main motor apparatus and the secondary motor apparatus of each movement and retaining assembly 2a, 2b can also be driven simultaneously to make the semi-finished product advance both by means of the conveyor belts 3a and/or 3b and by means of the movement and retaining assembly 2a and/or 2b.

The main motor apparatus 8 can be, for example, electrical.

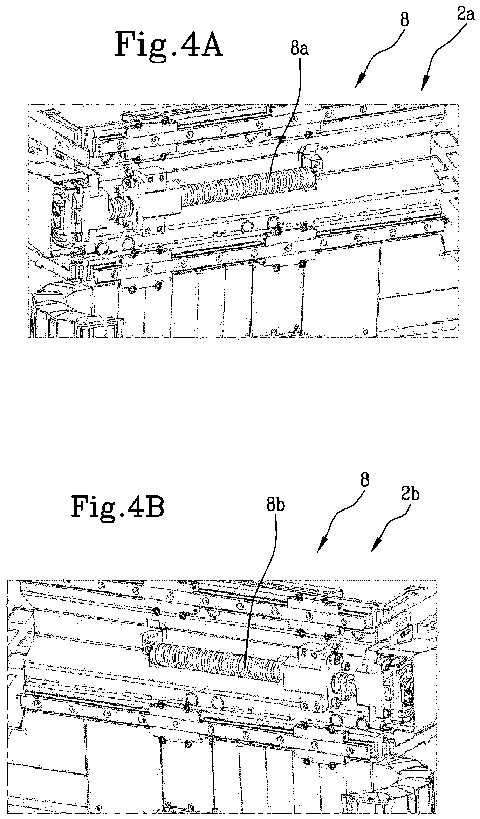

Without loss of generality, an embodiment illustrated in an exemplary manner in figure 4A and figure 4B provides for each of the respective main motors 8 to comprise, for example, a respective endless screw 8a, 8b for each of the respective movement and retaining assemblies 2a, 2b, so as to define a movement path for the first and the second movement assembly 2a, 2b.

For example, the first and the second movement and retaining assembly 2a, 2b can be engaged to the respective endless screw 8a, 8b with respective movement elements.

Alternatively, each of the respective main motors 8 can comprise a linear motor, or a pinion/rack mechanical drive.

It is therefore evident that the movement and retaining assembly 2a, 2b will define a substantially straight path and that the distance therebetween can vary as a function of the semi-finished product being processed and the type of process.

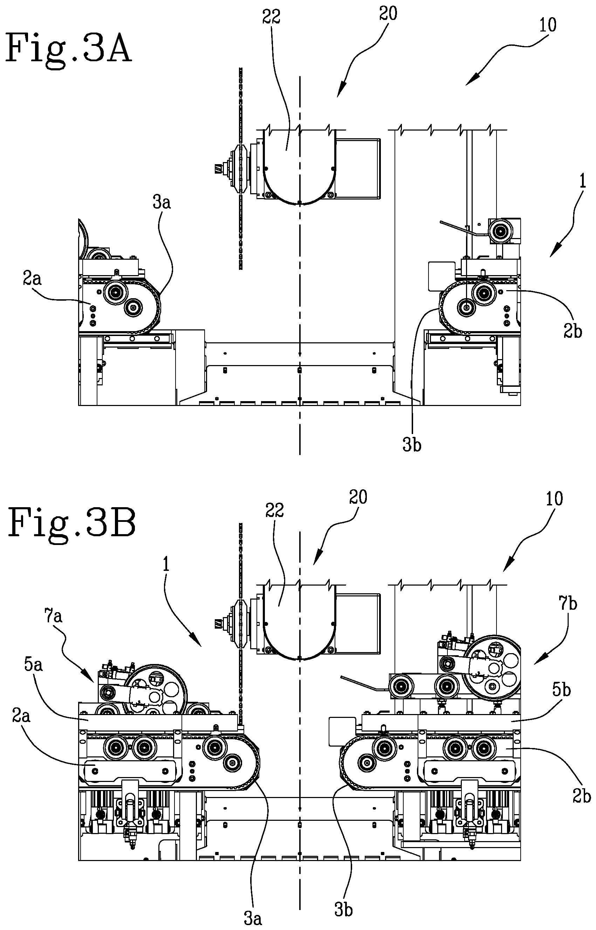

Figures 3A and 3B show the movement and retaining assemblies 2a, 2b in two different mutual positioning configurations.

In particular, figure 3A has movement and retaining assemblies 2a, 2b separated from each other so as to define a distance suitable for moving and/or retaining semi-finished products having a particularly elongated shape.

Figure 3B instead has assemblies 2a, 2b separated from each other so as to define a distance suitable for moving and/or retaining semi-finished products of small dimensions. In other words, figure 3B depicts a configuration of the assemblies 2a, 2b suitable for treating semi-finished products of smaller main dimensions with respect to the semi-finished products related to the configuration of figure 3A.

Advantageously, by virtue of such a movement, it is possible to retain and process a greater variety of semi-finished products as well as to carry out numerous processes.

Furthermore, by virtue of the presence of the main motor apparatuses, for example the structure of the endless screws 8a, 8b, it is possible to move the semi-finished products punctually, with great precision and stability. Preferably, as illustrated in the attached figures, the unit 1 finds useful application within a processing machine 10 of the same semi-finished products, for example in a cutting machine.

Such a cutting machine 10, in addition to the unit 1 described above, comprises at least one tool unit 20 movable within a working space and configured to carry out a cutting operation on the semi-finished product. Such a working space is at least partially interposed with the movement and retaining assemblies 2a, 2b. Preferably, the working space is further defined by the distance between the movement and retaining assemblies 2a, 2b.

In other words, the processing path "L" passes through the working space in which the tool unit 20 operates.

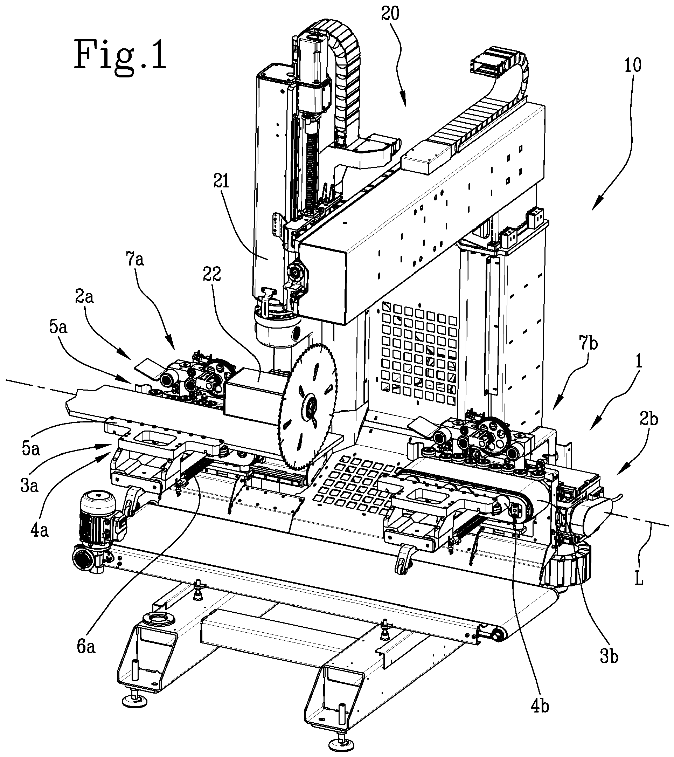

In an exemplary and non-limiting embodiment, illustrated in figure 1, the cutting machine 10 comprises a single tool unit 20.

However, further embodiments not illustrated can comprise a plurality of tool units 20 movable within the space so as to be able to operate a respective plurality of operations on the semi-finished product.

Each tool unit 20 can comprise a robotic arm 21, where such robotic arm 21 can be provided with a cutting tool 22 and can be configured so as to realise a movement of the cutting tool 22 on at least one degree of freedom in the working space, for example for a linear type of cutting. Preferably, the cutting tool 22 can comprise a circular saw and/or a miller. In an alternative embodiment not illustrated, the robotic arm 21 can comprise a different type of processing tool and not a cutting tool.

In general, the robotic arm 21 can for example be configured to carry out a movement of the processing tool on at least four degrees of freedom.

For example, such a robotic arm 21 can be configured to realise a movement of the processing tool, for example the cutting tool 22, on five degrees of freedom, allowing, in particular, translation on three axes mutually perpendicular to each other and rotation on two axes.

According to a further aspect, as illustrated in the attached figures, the processing machine 10 of semi-finished products can comprise at least one measuring unit 9.

Such a measuring unit 9 is integrally constrained to one of the upper retaining elements 7a or 7b.

Such a measuring unit 9 can substantially comprise a pneumatically-controlled arm provided with an angular position transducer and a metric wheel rotatably constrained to such an arm.

In particular, the angular position transducer is configured to detect the rotation angle of the metric wheel.

Functionally, when the respective upper retaining element 7a or 7b switches the configuration thereof into the retaining configuration, the metric wheel of the measuring unit 9 is configured to come into contact with the upper surface of the semi-finished product so that the movement of the semi-finished product rotates the metric wheel by dragging.

In particular, the friction generated between the metric wheel and the semi-finished product allows the metric wheel not to slip on the semi-finished product.

The movement of the metric wheel is detected by the angular position transducer which, consequently, accurately calculates the movement carried out by the semi-finished product along the processing path "L". Alternatively, the measuring unit 9 can comprise a contactless electronic transducer, functioning by Doppler effect.

According to the invention, a method for processing semi-finished products, for example wooden boards, as defined by the features of claim 11 is also provided.

Such a method is carried-out by means of the processing machine described above. In particular, the method comprises a first step in which the semi-finished product is placed in the inlet portion of the processing path "L", where said inlet portion is defined by the first movement and retaining assembly 2a.

The method then comprises a step of moving and/or retaining the semi-finished product along the processing path "L", so as to arrange the semi-finished product in the working space and therefore in a useful position for being processed.

The method then comprises a semi-finished product processing step.

In particular, in such a step the at least one tool unit 20 can perform a respective cutting process on the semi-finished product.

In particular, the steps of moving and/or retaining the semi-finished product and the step of processing the semi-finished product are simultaneous.

The method further comprises a step of releasing said semi-finished product from the outlet portion of the processing path L, in which said outlet portion is defined by the second movement and retaining assembly 2b of the machine 10.

The step of moving and/or retaining the semi-finished product along the processing path L comprises the following substeps:
- moving the first movement and retaining assembly 2a and/or the second movement and retaining assembly 2b towards or away from each other; and/or
- moving said semi-finished product by means of the first conveyor belt 3a of the first movement and retaining assembly 2a and/or by means of the second conveyor belt 3b of the second movement and retaining assembly 2b.

The method of the present invention can also comprise the substep of supportingly placing said semi-finished product on the respective first conveyor belt 3a of the first movement and retaining assembly 2a and/or on the respective second conveyor belt 3b of the second movement and retaining assembly 2b.

It should be noted that the movement of the semi-finished product can occur mainly according to different movement methods.

In a first method, the semi-finished product can be moved by means of the conveyor belts 3a, 3b by the secondary motor apparatus present in each movement unit 2a, 2b.

In such a solution, the semi-finished product remains in contact with the conveyor belts 3a, 3b by virtue of the friction. The lateral 5a, 5b and upper 7a, 7b retaining elements can assume a configuration such as to ensure sliding contact with the semi-finished product.

In other words, the lateral 5a, 5b and upper 7a, 7b retaining elements can act as containment guides in which the semi-finished product is channelled without the possibility of performing translations other than that imposed by the conveyor belts 3a, 3b.

At the same time the movement and retaining assemblies 2a, 2b can remain immovable.

A second method instead includes that the conveyor belts 3a, 3b are kept immovable and that the lateral 5a, 5b and upper 7a, 7b retaining elements are switched into a retaining configuration in which the contact with the semi-finished product is stable.

In other words, the lateral 5a, 5b and upper 7a, 7b retaining elements in cooperation with conveyor belts 3a, 3b act as a clamp.

Such a method includes the retaining configuration mentioned above, plus a movement of the semi-finished product implemented by the direct movement of the movement and retaining assemblies 2a, 2b, which in turn move by virtue of the main motor apparatus 8, along the processing path "L".

During such a movement, the assemblies 2a and 2b can be configured to maintain a constant distance between the assemblies themselves.

It is also evident that the movement of the semi-finished product, where required, can occur in a direction consistent with the processing path "L" as well as in a direction opposite to the processing path "L". In other words, it is possible to move the semi-finished product with an alternating motion along the processing path.

With regard to the processing step, the method includes that the at least one tool unit 20 can be moved in the working space.

Preferably, the at least one tool unit 20 can be kept fixed during a movement of the semi-finished product.

Advantageously, in cooperation with the movement (or retention) of the semi-finished product implemented by the movement and retaining assemblies 2a, 2b, it is possible to obtain a vast type of processes by the at least one tool unit 20.

In fact, starting from a semi-finished product, such as a wooden plank, it is possible to realise different cutting and milling processes.

For example, it is possible to obtain a wooden plank of a smaller width or length than the starting wooden plank. It is possible to work on different portions of such a wooden plank, for example head or tail portions so as to obtain different geometries.

Furthermore, it is possible to obtain milling processes on surface, head and tail portions of such a wooden plank.

Once the processing step is completed, the semi-finished product is released from the outlet portion of the processing path "L", which is defined by the second movement and retaining assembly 2b.

The method further includes that the inlet portion and the outlet portion of the processing path "L" are moved towards or away from each other as a function of a main extension dimension of the semi-finished product.

It is therefore evident that the dimensions of the working space will vary depending on the sliding of the movement and retaining assemblies 2a, 2b.

Some exemplary processes which can be realised with the exemplary embodiment of the cutting machine 10 illustrated in figure 1 are introduced below.

A first example concerns the cutting process carried out to obtain two distinct wooden planks starting from a main wooden plank of the same length and double width.

In such a process, the main wooden plank is moved by the conveyor belt 3a of the first movement and retaining assembly 2a along the processing path "L".

The robotic arm 21 of the tool unit 20, mounting a circular saw, performs a downward movement so that the cutting tool 22 engages and cuts the main wooden plank. In particular, the cutting tool 22 is arranged such that the circular saw is oriented in a longitudinal direction to the processing path "L".

The movement along the processing path "L" continues so that a head portion of said main wooden plank reaches the second movement and retaining assembly 2b. At this point, the lateral and upper retaining elements 5b and 7b of the second movement and retaining assembly 2b switch the configuration thereof so as to slidably retain the main wooden plank. In doing so, the conveyor belt 3b of the second movement and retaining assembly 2b engages and grips the main wooden plank.

The movement of the main wooden plank continues along the processing path "L" in order to cut the main wooden plank longitudinally until two distinct wooden plank are obtained.

In such a process, it is included that the lateral and upper retaining elements 5a, 5b, 7a, 7b, by virtue of the respective pneumatic or electrical activating devices thereof, imprint a different force on the semi-finished product in order to optimise the movement, retention and energy costs.

A second example relates to a cutting process carried out to obtain a wooden plank of reduced length starting from a main wooden plank.

In such a cutting process, the wooden plank is moved by the first movement and retaining assembly 2a, along the processing path "L", until it reaches the second movement and retaining assembly 2b. At this point, the lateral and upper retaining elements 5b and 7b of the second movement and retaining assembly 2b switch the configuration thereof so as to slidably retain the main wooden plank. In doing so, the conveyor belt 3b of the second movement and retaining assembly 2b engages and grips the main wooden plank. The movement of the main wooden plank is interrupted.

At this point, the robotic arm 21 of the tool unit 20, mounting a circular saw, can perform a downward movement so that the cutting tool 22 can engage and cut the main wooden plank. In particular, the cutting tool 22 is arranged such that the circular saw is oriented in a transversal direction to the processing path "L". Thereby the main wooden plank is cut, obtaining a wooden plank of reduced length.

The second movement and retaining assembly 2b, by means of the main motor apparatus 8, performs a movement moving away from the first movement and retaining assembly 2a.

At this point, the robotic arm 21 can perform a cutting process on a tail portion of the wooden plank of reduced length by orienting the circular saw obliquely with respect to the direction of the processing path "L", obtaining a clean cut with a desired geometry.

A third example relates to a cutting process performed to obtain a milled wooden plank starting from a main wooden plank.

In such a cutting process, the wooden plank is moved by the first movement and retaining assembly 2a, along the processing path "L", until it reaches the second movement and retaining assembly 2b.

At this point, the lateral and upper retaining elements 5a, 5b, 7a and 7b of the first and second movement and retaining assembly 2a, 2b switch the configuration thereof so as to stably retain the main wooden plank.

At this point, the robotic arm 21 of the tool unit 20, mounting a miller, performs a downward movement such that the cutting tool 22 engages an upper surface of the main wooden plank.

Such a cutting process includes that the first and second movement and retaining assembly 2a, 2b are moved simultaneously by the respective main motor apparatuses so as to be coordinated with the movement of the robotic arm 21.

Thereby, the tool unit 20 performs a very precise milling process on the upper surface of the main wooden plank, obtaining a milled wooden plank. It is also evident that the movement of the semi-finished product, where required, can occur in a direction consistent with the processing path "L" as well as in a direction opposite to the processing path "L". In other words, it is possible to move the semi-finished product with an alternating motion along the processing path.

With regard to the processing step, the method includes that the tool unit 20 can be moved in the working space.

Preferably, the tool unit can be kept fixed during a movement of the semi-finished product.

It should be noted that the present invention achieves the intended objects, overcoming the drawbacks mentioned in the prior art and providing a more versatile and precise movement unit, cutting machine and processing method capable of operating on a wide variety of semi-finished products.

Such results are achieved through the reciprocal and independent movement of the movement and retaining assembly, as well as the conveyor belts present therein, by virtue of which it is possible to operate on semi-finished products having a wide range of lengths, and in particular semi-finished products with a shorter length than the overall dimensions of the tool unit.

Furthermore, by virtue of the cooperation of conveyor belts and lateral and upper retaining elements, the semi-finished product is firmly retained during the cutting processes, reducing possible errors generated by undesired movements of the same.

Furthermore, the quality of the process is improved by the precision in the movement of the movement and retaining assembly, carried out for example by means of endless screws, and by that of the conveyor belts 3a, 3b.

Finally, the mobility of the movement unit as well as the tool unit allow to obtain many different types of processes.

## Claims

1. A movement unit (1) for moving semi-finished products, such as for example wooden boards, configured to be used in processing machines, for example in cutting machines, comprising a first and a second movement and retaining assembly (2a, 2b) configured to move and retain said semi-finished product along a processing path (L), said first and second movement and retaining assembly (2a, 2b) respectively defining an inlet portion and an outlet portion of said processing path (L);
wherein said first and/or second movement and retaining assembly (2a, 2b) are movable towards and away from one another along said processing path (L); wherein
said first and/or second movement and retaining assembly (2a, 2b) are provided with a respective main motor apparatus (8), configured to move the respective movement and retaining assembly (2a, 2b), **characterised in that** said first and/or second movement and retaining assembly (2a, 2b) comprise a respective conveyor belt (3a, 3b) for moving the semi-finished product and a secondary motor apparatus configured to move said conveyor belt (3a, 3b).

2. The unit (1) according to claim 1, wherein said first and second movement and retaining assembly (2a, 2b) are movable independently with respect to one another along said processing path (L).

3. The unit (1) according to claim 1 or 2, wherein said main motor apparatus (8) is electrical.

4. The unit (1) according to claim 3, wherein each main motor apparatus (8) comprises a respective endless screw (8a, 8b) for each of said first and second movement and retaining assembly (2a, 2b) so as to define a movement path for said first and second movement and retaining assembly (2a, 2b); each of said first and second movement and retaining assembly (2a, 2b) being engaged to the respective endless screw (8a, 8b) with respective movement elements.

5. The unit (1) according to one or more of the preceding claims, wherein each of said secondary motor apparatuses comprises at least two movement rollers operatively connected to the respective conveyor belt (3a, 3b); said first and second movement and retaining assembly (2a, 2b) further comprising support elements, operatively interposed between said at least two movement rollers so as to define a rest plane of said conveyor belt (3a, 3b); said support elements preferably comprising support rollers and/or a low-friction plane.

6. The unit (1) according to one or more of the preceding claims, wherein said first and/or second movement and retaining assembly (2a, 2b) further comprise lateral retaining elements (5a, 5b) movable towards and away from opposite lateral faces of said semi-finished product so as to define respectively a retaining configuration, in which the lateral retaining elements (5a, 5b) are in contact with said semi-finished product, and a disengaged configuration, wherein at least one of said lateral retaining elements (5a, 5b) is disengaged from said semi-finished product.

7. The unit (1) according to one or more of the preceding claims, wherein said first and/or second movement and retaining assembly (2a, 2b) comprise upper retaining elements (7a, 7b), movable at least in a transversal direction to said processing path (L), configured to engage, preferably defining a sliding contact, an upper face of said semi-finished product.

8. The unit (1) according to claim 7 when dependent on claim 6, wherein each of said lateral and upper retaining elements (5a, 5b, 7a, 7b) comprises a respective activating device, preferably pneumatic and/or electrical so as to be moved independently; each of said lateral and upper retaining elements (5a, 5b, 7a, 7b) being moved independently.

9. A processing machine (10) for processing semi-finished products, such as for example wooden boards, comprising:
- at least one tool unit (20) movable within a working space and configured to carry out at least one process, for example a cutting process, on said semi-finished product;
- a movement unit (1) for moving semi-finished products according to any one of the preceding claims;
wherein said processing path (L) passes through said working space.

10. The machine (10) according to claim 9, wherein each of said at least one tool unit (20) comprises a robotic arm (21) provided with a processing tool, the robotic arm (21) being configured so as to realise a movement of said processing tool on at least one degree of freedom in said working space; said processing tool being for example a cutting tool (22), for example being preferably a circular saw and/or a miller.

11. A method for processing semi-finished products, such as for example wooden boards, carried-out by means of a processing machine (10) according to claim 9 or 10, comprising the steps of:
- placing a semi-finished product in an inlet portion of a processing path (L) passing through a working space, wherein said inlet portion is defined by a first movement and retaining assembly (2a) of the machine (10);
- moving and/or retaining said semi-finished product along said processing path (L) in said working space;
- carrying out a process, for example a cutting process, on said semi-finished product in said working space during said step of moving and/or retaining;
- releasing said semi-finished product from an outlet portion of the processing path (L), wherein said outlet portion is defined by a second movement and retaining assembly (2b) of the machine (10);
wherein said step of moving and/or retaining said semi-finished product along said processing path (L) comprises the following substeps:
- moving said first movement and retaining assembly (2a) and/or said second movement and retaining assembly (2b) towards or away from each other; and/or
- moving said semi-finished product by means of a respective first conveyor belt (3a) of the first movement and retaining assembly (2a) and/or a respective second conveyor belt (3b) of the second movement and retaining assembly (2b) .

12. The method according to claim 11, wherein said step of moving and/or retaining can comprise one or more of the following substeps of:
- moving said semi-finished product by means of said conveyor belts (3a, 3b) while said semi-finished product is slidably retained by lateral retaining elements (5a, 5b) and by upper retaining elements (7a, 7b) of said first and/or second movement and retaining assembly (2a, 2b);
- moving said semi-finished product by movement of said first and/or second movement and retaining assembly (2a, 2b) while said semi-finished product is stably retained at least by said lateral retaining elements (5a, 5b) of said first and/or second movement and retaining assembly (2a, 2b) and said conveyor belts (3a, 3b) are immovable.

13. The method according to claim 11 or 12, wherein said step of moving and/or retaining is carried out by alternated movement of the semi-finished product along opposite directions of the processing path (L).

14. The method according to any one of claims 11 to 13, wherein said step of carrying out a process, for example a cutting process, comprises a substep of moving at least one tool unit (20) in said working space.

15. The method according to one or more of claims 11 to 14, wherein the step of moving said inlet portion and said outlet portion towards and/or away from each other is carried out as a function of a main extension dimension of said semi-finished product.

## Patentansprüche

1. Bewegungseinheit (1) zum Bewegen von Halbfertigprodukten, wie beispielsweise Holzbrettern, die dafür ausgelegt ist, in Bearbeitungsmaschinen, beispielsweise in Schneidemaschinen, eingesetzt zu werden, umfassend eine erste und eine zweite Bewegungs- und Haltebaugruppe (2a, 2b), die dafür ausgelegt ist, das Halbfertigprodukt entlang eines Verarbeitungspfades (L) zu bewegen und zu halten, wobei die erste und zweite Bewegungs- und Haltebaugruppe (2a, 2b) jeweils einen Einlassabschnitt beziehungsweise einen Auslassabschnitt des Verarbeitungspfades (L) definieren;
wobei die erste und/oder zweite Bewegungs- und Haltebaugruppe (2a, 2b) entlang des Verarbeitungspfades (L) aufeinander zu und voneinander weg beweglich sind; wobei die erste und/oder zweite Bewegungs- und Haltebaugruppe (2a, 2b) jeweils mit einer entsprechenden Hauptantriebsvorrichtung (8) ausgestattet sind, die für den Antrieb der entsprechenden Bewegungs- und Haltebaugruppe (2a, 2b) ausgelegt ist, **dadurch gekennzeichnet, dass** die erste und/oder zweite Bewegungs- und Haltebaugruppe (2a, 2b) ein entsprechendes Förderband (3a, 3b) umfassen, um das Halbfertigprodukt zu bewegen, und eine Nebenantriebsvorrichtung, die für den Antrieb des Förderbandes (3a, 3b) ausgelegt ist.

2. Einheit (1) nach Anspruch 1, wobei die erste und zweite Bewegungs- und Haltebaugruppe (2a, 2b) unabhängig voneinander entlang des Verarbeitungspfades (L) beweglich sind.

3. Einheit (1) nach Anspruch 1 oder 2, wobei die Hauptantriebsvorrichtung (8) elektrisch ist.

4. Einheit (1) nach Anspruch 3, wobei jede Hauptantriebsvorrichtung (8) eine entsprechende Schnecke (8a, 8b) für jede der ersten und zweiten Bewegungs- und Haltebaugruppen (2a, 2b) umfasst, um einen Bewegungspfad für die erste und zweite Bewegungs- und Haltebaugruppe (2a, 2b) zu definieren; wobei jede der ersten und zweiten Bewegungs- und Haltebaugruppen (2a, 2b) mittels entsprechender Bewegungselemente mit der entsprechenden Schnecke (8a, 8b) in Eingriff steht.

5. Einheit (1) nach einem oder mehreren der vorhergehenden Ansprüche, wobei jede der Nebenantriebsvorrichtungen zumindest zwei Bewegungsrollen umfasst, die mit dem entsprechenden Förderband (3a, 3b) wirkverbunden sind; wobei die erste und zweite Bewegungs- und Haltebaugruppe (2a, 2b) ferner Trägerelemente umfassen, die zwischen den zumindest zwei Bewegungsrollen wirkend angeordnet sind, um eine Auflagefläche für das Förderband (3a, 3b) zu definieren; wobei die Trägerelemente vorzugsweise Trägerrollen und/oder eine reibungsarme Fläche umfassen.

6. Einheit (1) nach einem oder mehreren der vorhergehenden Ansprüche, wobei die erste und/oder zweite Bewegungs- und Haltebaugruppe (2a, 2b) ferner seitliche Halteelemente (5a, 5b) umfasst, die auf einander gegenüberliegenden Seiten des Halbfertigproduktes zu diesen hin oder von diesen weg beweglich sind, so dass sie jeweils eine Haltekonfiguration definieren, in der die seitlichen Halteelemente (5a, 5b) in Kontakt mit dem Halbfertigprodukt stehen, beziehungsweise eine Nichteingriffskonfiguration, in der zumindest eines der seitlichen Halteelemente (5a, 5b) nicht in Eingriff mit dem Halbfertigprodukt steht.

7. Einheit (1) nach einem oder mehreren der vorhergehenden Ansprüche, wobei die erste und/oder zweite Bewegungs- und Haltebaugruppe (2a, 2b) obere Halteelemente (7a, 7b) umfasst, die zumindest in einer Querrichtung zum Verarbeitungspfad (L) beweglich sind und dafür ausgelegt sind, mit einer oberen Fläche des Halbfertigproduktes in Eingriff zu gelangen, um vorzugsweise einen Gleitkontakt zu definieren.

8. Einheit (1) nach Anspruch 7 sofern von Anspruch 6 abhängig, wobei jedes der seitlichen und oberen Halteelemente (5a, 5b, 7a, 7b) eine entsprechende Betätigungsvorrichtung umfasst, vorzugsweise pneumatischer und/oder elektrischer Art, um unabhängig bewegt werden zu können; wobei jedes der seitlichen und oberen Halteelemente (5a, 5b, 7a, 7b) unabhängig bewegt wird.

9. Bearbeitungsmaschine (10) zum Bearbeiten von Halbfertigprodukten, wie beispielsweise Holzbrettern, umfassend:
- zumindest eine Werkzeugeinheit (20), die innerhalb eines Arbeitsraums beweglich ist und dafür ausgelegt ist, zumindest einen Bearbeitungsvorgang, beispielsweise einen Schneidvorgang, an dem Halbfertigprodukt auszuführen;
- eine Bewegungseinheit (1) zum Bewegen von Halbfertigprodukten nach einem der vorhergehenden Ansprüche;
wobei der Verarbeitungspfad (L) durch den Arbeitsraum verläuft.

10. Maschine (10) nach Anspruch 9, wobei jede der zumindest einen Werkzeugeinheiten (20) einen Roboterarm (21) umfasst, der mit einem Bearbeitungswerkzeug ausgestattet ist, wobei der Roboterarm (21) dafür ausgelegt ist, eine Bewegung des Bearbeitungswerkzeugs in zumindest einem Freiheitsgrad in dem Arbeitsraum auszuführen; wobei das Bearbeitungswerkzeug beispielsweise ein Schneidwerkzeug (22) ist, vorzugsweise zum Beispiel eine Kreissäge und/oder ein Fräser.

11. Verfahren zum Bearbeiten von Halbfertigprodukten, wie beispielsweise Holzbrettern, ausgeführt mittels einer Bearbeitungsmaschine (10) nach Anspruch 9 oder 10, folgende Schritte beinhaltend:
- Anordnen eines Halbfertigproduktes an einem Einlassabschnitt eines Verarbeitungspfades (L) der durch einen Arbeitsraum verläuft, wobei der Einlassabschnitt durch eine erste Bewegungs- und Haltebaugruppe (2a) der Maschine (10) definiert ist;
- Bewegen und/oder Halten des Halbfertigproduktes entlang des Verarbeitungspfades (L) in dem Arbeitsraum;
- Ausführen eines Vorgangs, beispielsweise eines Schneidvorgangs, auf dem Halbfertigprodukt in dem Arbeitsraum während des Schrittes des Bewegens und/oder Haltens;
- Ausgeben des Halbfertigproduktes von einem Auslassabschnitt des Verarbeitungspfades (L), wobei der Auslassabschnitt durch eine zweite Bewegungs- und Haltebaugruppe (2b) der Maschine (10) definiert ist; wobei der Schritt des Bewegens und/oder Haltens des Halbfertigproduktes entlang des Verarbeitungspfades (L) folgende Unterschritte beinhaltet:
- Bewegen der ersten Bewegungs- und Haltebaugruppe (2a) und/oder der zweiten Bewegungs- und Haltebaugruppe (2b) aufeinander zu oder voneinander weg; und/oder
- Bewegen des Halbfertigproduktes mittels eines entsprechenden ersten Förderbandes (3a) der ersten Bewegungs- und Haltebaugruppe (2a) und/oder eines entsprechenden zweiten Förderbandes (3b) der zweiten Bewegungs- und Haltebaugruppe (2b).

12. Verfahren nach Anspruch 11, wobei der Schritt des Bewegens und/oder Haltens einen oder mehrere der nachfolgenden Unterschritte beinhalten kann:
- Bewegen des Halbfertigproduktes mittels der Förderbänder (3a, 3b), während das Halbfertigprodukt gleitbar von seitlichen Halteelementen (5a, 5b) und oberen Halteelementen (7a, 7b) der ersten und/oder zweiten Bewegungs- und Haltebaugruppe (2a, 2b) gehalten wird;
- Bewegen des Halbfertigproduktes durch Bewegung der ersten und/oder zweiten Bewegungs- und Haltebaugruppe (2a, 2b), während das Halbfertigprodukt zumindest von den seitlichen Halteelementen (5a, 5b) der ersten und/oder zweiten Bewegungs- und Haltebaugruppe (2a, 2b) stabil gehalten wird und die Förderbänder (3a, 3b) unbeweglich sind.

13. Verfahren nach Anspruch 11 oder 12, wobei der Schritt des Bewegens und/oder Haltens durch abwechselnde Bewegung des Halbfertigproduktes in einander entgegengesetzten Richtungen des Verarbeitungspfades (L) ausgeführt wird.

14. Verfahren nach einem der Ansprüche von 11 bis 13, wobei der Schritt des Ausführens eines Vorgangs, beispielsweise eines Schneidvorgangs, einen Unterschritt des Bewegens zumindest einer Werkzeugeinheit (20) in dem Arbeitsraum beinhaltet.

15. Verfahren nach einem oder mehreren der Ansprüche von 11 bis 14, wobei der Schritt des Bewegens des Einlassabschnitts und des Auslassabschnitts aufeinander zu und/oder voneinander weg als Funktion einer Abmessung in Hauptausdehnungsrichtung des Halbfertigproduktes ausgeführt wird.

## Revendications

1. Une unité de mise en mouvement (1) pour déplacer des produits semi-finis, tels que par exemple des planches de bois, configurée pour être utilisée dans des machines à usiner, par exemple dans des machines à découper, comprenant un premier et un deuxième groupe de mise en mouvement et de retenue (2a, 2b) configurés pour déplacer et retenir ledit produit semi-fini le long d'un parcours d'usinage (L), lesdits premier et deuxième groupes de mise en mouvement et de retenue (2a, 2b) définissant respectivement une portion d'entrée et une portion de sortie dudit parcours d'usinage (L) ;
où lesdits premier et/ou deuxième groupes de mise en mouvement et de retenue (2a, 2b) sont mobiles en approchement et en éloignement l'un de l'autre le long dudit parcours d'usinage (L) ;
où lesdits premier et/ou deuxième groupes de mise en mouvement et de retenue (2a, 2b) sont dotés d'un appareil moteur principal (8) respectif, configuré pour mettre en mouvement le groupe de mise en mouvement et de retenue (2a, 2b) respectif, **caractérisée en ce que** lesdits premier et/ou deuxième groupes de mise en mouvement et de retenue (2a, 2b) comprennent une bande transporteuse (3a, 3b) respective pour déplacer le produit semi-fini et un appareil moteur secondaire configuré pour mettre en mouvement ladite bande transporteuse (3a, 3b) .

2. L'unité (1) selon la revendication 1, dans laquelle lesdits premier et deuxième groupes de mise en mouvement et de retenue (2a, 2b) sont mobiles indépendamment l'un de l'autre le long dudit parcours d'usinage (L).

3. L'unité (1) selon la revendication 1 ou 2, dans laquelle ledit appareil moteur principal (8) est électrique.

4. L'unité (1) selon la revendication 3, dans laquelle chaque appareil moteur principal (8) comprend une vis sans fin (8a, 8b) respective pour chacun desdits premier et deuxième groupes de mise en mouvement et de retenue (2a, 2b) de manière à définir un parcours de déplacement pour lesdits premier et deuxième groupes de mise en mouvement et de retenue (2a, 2b) ; chacun desdits premier et deuxième groupes de mise en mouvement et de retenue (2a, 2b) étant assujetti à la vis sans fin (8a, 8b) respective avec des éléments de mise en mouvement respectifs.

5. L'unité (1) selon une ou plusieurs des revendications précédentes, dans laquelle chacun desdits appareils moteurs secondaires comprend au moins deux rouleaux de mise en mouvement opérationnellement reliés à la bande transporteuse (3a, 3b) respective ; lesdits premier et deuxième groupes de mise en mouvement et de retenue (2a, 2b) comprenant en outre des éléments de support, opérationnellement interposés entre lesdits au moins deux rouleaux de mise en mouvement de manière à définir un plan d'appui de ladite bande transporteuse (3a, 3b) ; lesdits éléments de support comprenant de préférence des rouleaux de support et/ou un plan à bas frottement.

6. L'unité (1) selon une ou plusieurs des revendications précédentes, dans laquelle lesdits premier et/ou deuxième groupes de mise en mouvement et de retenue (2a, 2b) comprennent en outre des éléments de retenue latéraux (5a, 5b) mobiles en approchement et en éloignement de faces latérales opposées dudit produit semi-fini de manière à définir respectivement une configuration de retenue, dans laquelle les éléments de retenue latéraux (5a, 5b) sont en contact avec ledit produit semi-fini, et une configuration de désengagement, dans laquelle au moins un desdits éléments de retenue latéraux (5a, 5b) est dégagé dudit produit semi-fini.

7. L'unité (1) selon une ou plusieurs des revendications précédentes, dans laquelle lesdits premier et/ou deuxième groupes de mise en mouvement et de retenue (2a, 2b) comprennent des éléments de retenue supérieurs (7a, 7b) mobiles au moins dans une direction transversale audit parcours d'usinage (L), configurés pour assujettir, de préférence en définissant un contact de coulissement, une face supérieure dudit produit semi-fini.

8. L'unité (1) selon la revendication 7 quand dépendant de la revendication 6, dans laquelle chacun desdits éléments de retenue latéraux et supérieurs (5a, 5b, 7a, 7b) comprend un dispositif d'actionnement respectif, de préférence pneumatique et/ou électrique de manière à être déplacé indépendamment ; chacun desdits éléments de retenue latéraux et supérieurs (5a, 5b, 7a, 7b) étant déplacé indépendamment.

9. Une machine à usiner (10) pour l'usinage de produits semi-finis, tels que par exemple des planches de bois, comprenant :
- au moins une unité outil (20) mobile dans les limites d'un espace de travail et configurée pour effectuer au moins un usinage, par exemple un usinage de coupe, sur ledit produit semi-fini ;
- une unité de mise en mouvement (1) pour déplacer les produits semi-finis selon l'une quelconque des revendications précédentes ;
où ledit parcours d'usinage (L) passe à travers ledit espace de travail.

10. La machine (10) selon la revendication 9, dans laquelle chacune de ladite au moins une unité outil (20) comprend un bras robotique (21) doté d'un outil d'usinage, le bras robotique (21) étant configuré de manière à réaliser un mouvement dudit outil d'usinage sur au moins un degré de liberté dans ledit espace de travail ; ledit outil d'usinage étant par exemple un outil de coupe (22), par exemple étant de préférence une scie circulaire et/ou une fraise.

11. Un procédé pour usiner des produits semi-finis, tels que par exemple des planches de bois, effectué au moyen d'une machine à usiner (10) selon la revendication 9 ou 10, comprenant les étapes consistant à :
- placer un produit semi-fini dans une portion d'entrée d'un parcours d'usinage (L) passant à travers un espace de travail, où ladite portion d'entrée est définie par un premier groupe de mise en mouvement et de retenue (2a) de la machine (10) ;
- déplacer et/ou retenir ledit produit semi-fini le long dudit parcours d'usinage (L) dans ledit espace de travail ;
- effectuer un usinage, par exemple un usinage de coupe, sur ledit produit semi-fini dans ledit espace de travail durant ladite étape de déplacement et/ou de retenue ;
- relâcher ledit produit semi-fini depuis une portion de sortie du parcours d'usinage (L), où ladite portion de sortie est définie par un deuxième groupe de mise en mouvement et de retenue (2b) de la machine (10) ;
où ladite étape de déplacement et/ou de retenue dudit produit semi-fini le long dudit parcours d'usinage (L) comprend les sous-étapes suivantes :
- déplacer ledit premier groupe de mise en mouvement et de retenue (2a) et/ou ledit deuxième groupe de mise en mouvement et de retenue (2b) en approchement ou en éloignement l'un de l'autre ; et/ou
- déplacer ledit produit semi-fini au moyen d'une première bande transporteuse (3a) respective du premier groupe de mise en mouvement et de retenue (2a) et/ou d'une deuxième bande transporteuse (3b) respective du deuxième groupe de mise en mouvement et de retenue (2b).

12. Le procédé selon la revendication 11, dans lequel ladite étape de déplacement et/ou de retenue peut comprendre une ou plusieurs des sous-étapes suivantes consistant à :
- déplacer ledit produit semi-fini au moyen desdites bandes transporteuses (3a, 3b) alors que ledit produit semi-fini est retenu de façon coulissante par des éléments de retenue latéraux (5a, 5b) et par des éléments de retenue supérieurs (7a, 7b) dudit premier et/ou deuxième groupe de mise en mouvement et de retenue (2a, 2b) ;
- déplacer ledit produit semi-fini par le biais d'une mise en mouvement dudit premier et/ou deuxième groupe de mise en mouvement et de retenue (2a, 2b) alors que ledit produit semi-fini est retenu de façon stable au moins par lesdits éléments de retenue latéraux (5a, 5b) dudit premier et/ou deuxième groupe de mise en mouvement et de retenue (2a, 2b) et lesdites bandes transporteuses (3a, 3b) sont immobiles.

13. Le procédé selon la revendication 11 ou 12, dans lequel ladite étape de déplacement et/ou de retenue est effectuée par un mouvement alterné du produit semi-fini le long de directions opposées du parcours d'usinage (L).

14. Le procédé selon l'une quelconque des revendications de 11 à 13, dans lequel ladite étape d'exécution d'un usinage, par exemple un usinage de coupe, comprend une sous-étape consistant à déplacer au moins une unité outil (20) dans ledit espace de travail.

15. Le procédé selon une ou plusieurs des revendications de 11 à 14, dans lequel l'étape de déplacement de ladite portion d'entrée et de ladite portion de sortie en approchement et/ou en éloignement l'une de l'autre est effectuée en fonction d'une dimension principale d'extension dudit produit semi-fini.
